# EUROPÄISCHE PATENTSCHRIFT

(11) **EP 0 807 772 B1**
(45) Veröffentlichungstag und Bekanntmachung des Hinweises auf die Patenterteilung: **04.12.2002**
(21) Anmeldenummer: 97107057.8
(22) Anmeldetag: 29.04.1997
(51) Int. Cl.: F16H 61/02

(54) **Verfahren zum Betreiben eines Fahrzeugs mit mehreren Antriebsmaschinen**
Method for driving a vehicle with plural prime movers
Méthode pour l'entraînement d'un véhicule avec plusieurs machines motrices

(30) Priorität: 14.05.1996 DE 19619321
(43) Veröffentlichungstag der Anmeldung: 19.11.1997
(73) Patentinhaber: Voith Turbo GmbH & Co. KG, 89522 Heidenheim (DE)
(72) Erfinder: Bek, Manfred, 89520 Heidenheim (DE)
(74) Vertreter: Dr. Weitzel & Partner

(56) Entgegenhaltungen:
- DE-A- 1 655 194
- US-A- 4 766 967

## Beschreibung

Die Erfindung betrifft ein Verfahren und eine Vorrichtung zum Betreiben eines Fahrzeuges mit mehreren Antriebsmaschinen gemäß Ansprüche 1 und 6.

Elektrische Maschinen finden heute vermehrt Verwendung auch zum Antrieb von Fahrzeugen, insbesondere Nutzfahrzeugen im Straßenverkehr (siehe z.B. "Ein elektrischer Einzelradantrieb für Citybusse der Zukunft" von B. Wüst, R. Müller, A. Lange in "DER NAHVERKEHR", 6/1994, Alba Fachverlag, Düsseldorf).

Die gattungsbildende DE 1 655 194 A offenbart ein Verfahren zum Betrieb eines Fahrzeuges mit mehreren Antriebsmaschinen, wobei jeder der Maschinen ein mindestens zweistufiges, schaltbares Getriebe nachgeordnet ist, mit dem Merkmal, dass die den Antriebsmaschinen nachgeordneten Getriebe zeitlich versetzt geschaltet werden. Die darin beschriebene Steuereinrichtung weist die Merkmale des Oberbegriffs des Anspruchs 6 auf.

Bei elektrischen Maschinen gibt es Betriebsbereiche mit sehr gutem Wirkungsgrad und Betriebsbereiche mit niedrigerem Wirkungsgrad. Werden elektrische Maschinen wie in oben genanntem Artikel beschrieben in Fahrzeugen eingesetzt, so wird in der Regel das Antriebssystem so ausgelegt, daß der überwiegende Betriebsanteil in den Bereichen optimalen Wirkungsgrades stattfindet. Der Betrieb in den Bereichen geringeren Wirkungsgrades läßt sich jedoch aufgrund der benötigten Drehzahlbereiche nicht vermeiden. Deshalb wird in verschiedenen Einsatzfällen der elektrischen Maschinen ein Getriebe nachgeschaltet. Dieses Getriebe hat aber den Nachteil, daß eine Zugkraftunterbrechung während der Schaltung, z.B. bei einem Klauengetriebe, auftritt bzw. zur Vermeidung einer solchen Zugkraftunterbrechung ein entsprechend aufwendiges Getriebe eingesetzt werden muß, wie z.B. ein Planetengetriebe mit Lamellenkupplung oder - bremse.

Wegen der mit dem Schaltvorgang einhergehenden Zugkraftunterbrechung sind bislang für die Antriebssysteme von Straßenfahrzeugen immer nur Radgetriebe mit konstanter Übersetzung vorgesehen gewesen (siehe z.B. o.g. Veröffentlichung "Ein elektrischer Einzelradantrieb für City-Busse der Zukunft").

Des weiteren ist ein Einsatz von selbsttätig schaltenden bzw. schaltbaren Getrieben im Stand der Technik für Elektroantriebe bislang ausgeschlossen worden, da hierfür zuviel Energie aufgewandt werden mußte.

Aufgabe der Erfindung ist es somit, die Nachteile des Standes der Technik zu überwinden und ein Verfahren zum Antrieb eines Fahrzeuges mit mehreren Antriebsmaschinen und eine Steuereinrichtung hierfür anzugeben, die es erlaubt, das Antriebssystem auch für unterschiedliche Drehzahlbereiche immer im Bereich des optimalen Wirkungsgrades zu betreiben und ständig die benötigte Zugkraft zur Verfügung zu stellen.

Zur Lösung dieser Aufgabe ist erfindungsgemäß vorgesehen, daß bei einem Fahrzeug, das mehrere Antriebsmaschinen umfaßt, die jeweils ein Rad oder eine Achse antreiben, jeder der Antriebsmaschinen, die elektrische Maschinen sind, ein synchronisiertes oder unsynchronisiertes mehrstufiges Getriebe nachgeschaltet ist, das die Bereiche optimalen Wirkungsgrades in andere Abtriebsdrehzahlen transformiert und diese Getriebe gemäß dem erfindungsgemäßen Verfahren nach Anspruch 1 und der erfindungsgemäßen Steuervorrichtung nach Anspruch 6 derart gesteuert werden, daß nur eine kurzzeitige Reduzierung der Zugkraft bzw. keine Zugkraftunterbrechung auftritt.

Gemäß dem kennzeichnenden Teil von Anspruch 6 ist die Steuereinrichtung zur Fahrsteuerung für ein derartiges Fahrzeug so ausgelegt, daß die Steuereinrichtung einen ersten Speicherbereich aufweist, in den die Drehzahl eingelesen wird und anhand eines Kennlinienfeldes der Gesamtwirkungsgrad der Antriebsmaschine bestimmt wird, die Steuereinrichtung an das der ersten Antriebsmaschine nachgeordnete Getriebe über eine erste Schaltleitung angeschlossen ist, derart, daß bei Erreichen des Schaltpunktes ein Schaltimpuls zum Schalten des Getriebes über die Schaltleitung zugeführt wird, und die Steuereinrichtung an das der zweiten Antriebsmaschine nachgeordnete Getriebe über eine zweite Schaltleitung angeschlossen ist, derart, daß ein Schaltimpuls zum Schalten des Getriebes dem Getriebe zugeführt wird, nachdem die Umschaltung des ersten Getriebes erfolgt ist.

Weiterbildungen und besonders vorteilhafte Ausgestaltungen sind Gegenstand der den Hauptansprüchen nachgeordneten Unteransprüche.

Insbesondere kann in einer bevorzugten Ausführungsform vorgesehen sein, daß die Antriebsmaschine eine elektrische Maschine ist, vorzugsweise eine Transversalflußmaschine, wie sie beispielsweise aus der deutschen Patentschrift DE 39 27 453 D2 bekannt ist.

Die Antriebsmaschinen können in einer Ausführungsform der Erfindung jedem Rad einer Achse zugeordnet sein, oder aber nur den jeweiligen Achsen. Entsprechend der Anordnung der Antriebsmaschinen ist es in einer ersten Ausführungsform der Erfindung möglich, daß zunächst das Getriebe der Antriebsmaschine, die auf die Vorderachse wirkt, geschaltet wird, und anschließend das Getriebe, das auf die Hinterachse wirkt oder umgekehrt.

Ist eine Antriebsmaschine für jedes Rad der Achse vorgesehen, so sind die folgenden Schaltabfolgen der Getriebe denkbar: In einer ersten Ausführungsform kann vorgesehen sein, daß zunächst das Getriebe der Antriebsmaschine des linken Rades in Fahrtrichtung gesehen der Vorder- bzw. Hinterachse geschaltet wird und anschließend das Getriebe der Antriebsmaschine des rechten Rades der Vorder- bzw. Hinterachse.

Selbstverständlich ist es möglich, dies auch umgekehrt auszuführen. In einer Weiterbildung der Erfindung kann vorgesehen sein, eine Schaltabfolge zu realisieren, bei der zunächst das Getriebe der Antriebsmaschine des linken Rades in Fahrtrichtung gesehen der Vorderachse geschaltet wird und anschließend das Getriebe der Antriebsmaschine des rechten Rades in Fahrtrichtung gesehen der Hinterachse oder umgekehrt.

Besonders bevorzugt ist eine Ausführungsform, bei der die Leistung der Antriebsmaschine, deren Getriebe nicht geschaltet wird, erhöht wird, um die durch die Schaltung verursachte Zugkraftunterbrechung, die an dem anderen Getriebe auftritt, zu kompensieren, derart, daß überhaupt keine Zugkraftreduktion auftritt.

Als Getriebe ist vorgesehen, daß mehrstufige, vorzugsweise zweistufige Getriebe zum Einsatz gelangen. Eine besonders preisgünstige Bauform kann dann realisiert werden, wenn die Getriebe als sehr einfache Klauengetriebe ausgebildet sind, die entweder synchronisiert oder unsynchronisiert ausgelegt sein können. Besonders bevorzugt zur Durchführung des erfindungsgemäßen Verfahrens sind selbsttätig schaltende bzw. schaltbare Getriebe.

Die Erfindung soll nachfolgend anhand der Zeichnungen näher erläutert werden.

Es zeigt:
- Abbildung 1: ein Ablaufdiagramm der Fahrsteuerung in einer einfachen Version ohne Kompensation der durch die Umschaltung verursachten Zugkraftreduktion
- Abbildung 2: die erfindungsgemäße Steuereinrichtung zur Fahrsteuerung für ein Fahrzeug mit mehreren Antriebsmaschinen.

Gemäß dem erfindungsqemäßen Verfahren wird zunächst ermittelt, ob die Antriebsmaschine, in vorliegendem Fall die als motorbetriebene Transversalflußmaschine im optimalen Bereich betreffend den Wirkungsgrad arbeitet.

Da der Wirkungsgrad der elektrischen Maschine im wesentlichen davon abhängt, daß die Antriebsmaschine in einem bestimmten Drehzahlbereich betrieben wird, stellt eine nach dem TFM-Motor aufgenommene Drehzahl ein direktes Maß für den Wirkungsgrad der Maschine dar.

Daher ist in der vorliegend dargestellten sehr einfachen Ausführungsform in einem ersten Schritt des erfindungsgemäßen Verfahrens vorgesehen, den aktuellen Drehzahlwert der elektrischen Maschine in periodischen Abständen ΔT in einen Speicherbereich der Steuereinheit einzulesen. Durch Vergleich mit den in der Steuereinheit abgelegten Kennlinien wird ermittelt, ob die Antriebsmaschine in optimalem Bereich betreffend den Wirkungsgrad arbeitet.

Selbstverständlich können in einer weitergebildeten Ausführungsform auch andere für den Wirkungsgrad der elektrischen Maschine charakteristischen Größen noch aufgenommen, in den Speicherbereich eingelesen und mit den Kennlinien in Bezug auf einen optimalen Wirkungsgrad verglichen werden.

Wird bei der Abfrage, ob die Antriebsmaschine im optimalen Bereich arbeitet, festgestellt, daß dies der Fall ist, so wird nach einer Einlesewartezeit ΔT, die im Bereich von 1 ms bis 1 s liegen kann, ein neuer Wert eingelesen. Arbeitet die Antriebsmaschine nicht im optimalen Bereich, so soll das nachgeschaltete Getriebe umgeschaltet werden. Auf diese Art und Weise ist es möglich, die Bereich des otpimalen Wirkungsgrades der elektrischen Maschine in einen anderen Abtriebsdrehzahlbereich zu transformieren. Beispielsweise kann bei einen zweistufigen Getriebe der Bereich des optimalen Wirkungsgrades dann zweimal durchfahren werden, wodurch der Gesamtwirkungsgrad angehoben wird. Da während der Umschaltung des Getriebes, insbesondere wenn die einfach aufgebauten Klauengetriebe verwendet werden, die nur während der Schaltung Hilfsenergie benötigen, eine Zugkraftunterbrechung auftritt, ist gemäß der Erfindung vorgesehen, die den verschiedenen Antriebsmaschinen zugeordneten Getriebe nicht gleichzeitig, sondern nacheinander zu schalten. In dem vorliegend dargestellten Ausführungsbeispiel wird dies dadurch erreicht, daß zunächst das Getriebe der ersten Antriebsmaschine umgeschaltet wird. In der dargestellten Ausführungsform wird abgefragt, ob die Umschaltung erfolgt ist, dies kann beispielsweise dadurch geschehen, daß wiederum der aktuelle Drehzahlwert der Antriebsmaschine in periodischen Abfragezeitintervallen Δt bestimmt wird. Ist die Umschaltung noch nicht erfolgt, so wird nach Δt nochmals die Abfrage durchgeführt. Ist dagegen die Umschaltung des Getriebes der ersten Antriebsmaschine erfolgt, so wird nachfolgend die Umschaltung des Getriebes der zweiten Antriebsmaschine vorgenommen. In einer Weiterbildung der Erfindung kann vorgesehen sein, daß während die Umschaltung des Getriebes der ersten Antriebsmaschine erfolgt, kurzzeitig die Leistung der zweiten Antriebsmaschine in dem Maß erhöht wird, in dem die Zugkraft bei der Umschaltung des Getriebes der ersten Antriebsmaschine vermindert wird. Durch diese Maßnahme ist es möglich, die Zugkraftreduktion beim Schalten des Getriebes durch die restlichen Antriebsmaschinen auszugleichen und somit den Ausfall einer Antriebseinheit während des Schaltvorgangs. Eine Zugkraftreduktion würde in einem solchen Fall überhaupt nicht auftreten.

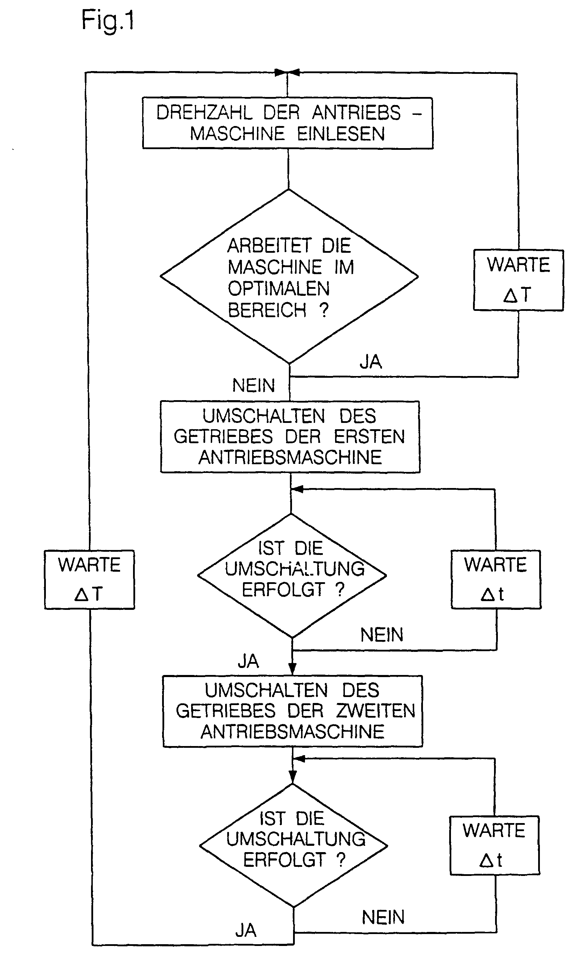

Auch bei der Umschaltung des Getriebes der zweiten Antriebsmaschine ist eine Abfrage nachgeschaltet, mit der überwacht wird, ob die Umschaltung abgeschlossen ist oder nicht. Ist auch die Umschaltung der zweiten Antriebsmaschine beendet, so wird nach einer Einlesewartezeit ΔT erneut die Drehzahl der Antriebsmaschine eingelesen und das in Abbildung 1 dargestellte Steuerungsverfahren wiederholt.

Für die Abfolge der Umschaltung der Getriebe der unterschiedlichen Antriebsmaschinen ist es möglich, verschiedene Konzepte vorzusehen.

Allen Ausführungsformen bzw. Konzepten ist jedoch gemeinsam, daß eine Umschaltung des nachfolgenden Getriebes erst erfolgt, wenn der Umschaltvorgang des ersten Getriebes abgeschlossen ist.

Beispielsweise kann der Vorderachse eine Antriebsmaschine mit Getriebe und der Hinterachse eine ebensolche zugeordnet sein. Dann ist möglich, zunächst das Getriebe der Antriebsmaschine der Vorderachse umzuschalten und anschließend das Getriebe der Hinterachse oder umgekehrt.

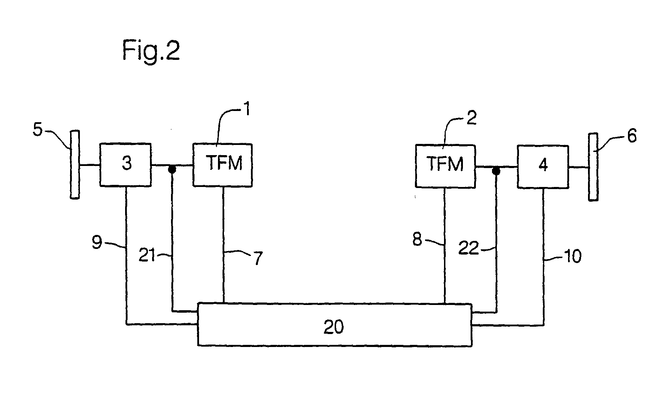

Es kann aber auch vorgesehen sein, daß jedem Rad einer Achse eine eigene Antriebsmaschine mit nachgeschaltetem Getriebe zugeordnet ist. Dann ergeben sich folgende Möglichkeiten der Schaltabfolge: Zunächst wird das der in Fahrtrichtung gesehen linken Antriebsmaschine der Vorderachse zugeordnete Getriebe geschaltet und anschließend das der Antriebsmaschine des rechten Rades in Fahrtrichtung gesehen. Anschließend findet der Umschaltvorgang an der Hinterachse analog zu dem der Vorderachse statt. Selbstverständlich ist es möglich, zunächst die Getriebe der Hinterachse umzuschalten und anschließend die der Vorderachse. In einer besonders bevorzugten Ausführungsform ist eine Schaltung über Kreuz vorgesehen. Das heißt, daß zunächst das Getriebe eines Rades der Vorderachse umgeschaltet wird, beispielsweise das dem linken Rad in Fahrtrichtung gesehene zugeordnete, und anschließend das Getriebe des rechten Rades der Hinterachse. Die Umschaltung der beiden weiteren Antriebsmotoren findet ebenfalls wieder über Kreuz nachfolgend statt. Eine derartige Über-Kreuz-Schaltung hat beispielsweise den Vorteil, daß ein ungleiches Ziehen des Fahrzeuges vermieden wird. Für den Fachmann ergeben sich aus den bislang dargestellten Beispielsfällen die restlichen Möglichkeiten der nacheinander ausgeführten Umschaltung auf zwanglose Art und Weise. Neben dem erfindungsgemäßen Verfahren wird auch eine Fahrsteuereinrichtung zur Durchführung insbesondere dieses Verfahrens angegeben. Eine derartige, beispielhafte Vorrichtung zeigt Abbildung 2.

In Abbildung 1 sind die den jeweiligen Rädern 5,6 einer Achse, die die Vorderachse oder Hinterachse sein kann, zugeordneten Antriebsmaschinen 1, 2 und die nachgeschalteten Getriebe 3, 4 dargestellt. Bei den nachgeschalteten Getrieben handelt es sich um mehrstufige, vorzugsweise zweistufige Getriebe, die synchronisiert oder unsynchronisiert ausgeführt sein können. Besonders vorteilhaft ist es, als Getriebe zweistufige Klauengetriebe (siehe hierzu beispielsweise Dubbel, Taschenbuch für den Maschinenbau, 1996, Seiten G 63 bis G 195) vorzusehen, die sich insbesondere durch einen einfachen Getriebeaufbau auszeichnen. Desweiteren benötigen solche Getriebe nur während der Schaltung Hilfsenergie, wodurch der Wirkungsgradverlust durch das Getriebe selbst gering ist. Aufwendiger wäre es, andere Getriebearten vorzusehen, die insbesondere darunter leiden, daß durch das Getriebe ein ständiger Wirkungsgradverlust auftritt, was natürlich den Gesamtwirkungsgrad der Antriebsmaschinen für das Fahrzeug verringert. Die jeweilige Antriebseinheit aus Antriebsmaschine, die vorliegend eine Transversalflußmaschine ist, und Getriebe sind je einem Rad zugeordnet. So ist die Transversalflußmaschine 1 und das nachgeschaltete Getriebe 3 dem in Fahrtrichtung gesehenen linken Rad 5, und in analoger Weise die Transversalflußmaschine 2 und das Getriebe 4 dem in Fahrtrichtung gesehenen rechten Rad 6 zugeordnet. Sowohl die Transversalfluß-Motoren 1, 2 als auch die Getriebe 3, 4 sind über Steuerleitungen 7, 8, 9, 10 mit einer Steuereinrichtung 20, die vorzugsweise ein Microcomputer mit entsprechenden Ausgängen ist, angeschlossen. Zwischen Transversalflußmaschine und nachfolgendem Getriebe sind Meßleitungen 21, 22 vorgesehen, die ebenfalls an die Steuereinrichtung angeschaltet sind. Über die Meßleitungen 21, 22 werden Meßsignale, die mittels Aufnehmern bzw. Sensoren von der Transversalflußmaschine abgenommen werden, an die Steuereinrichtung übermittelt. Bei den Aufnehmern bzw. Sensoren kann es sich in einer Ausführungsform um Drehzahlaufnehmern handeln, mit der die momentane Drehzahl der Transversalflußmaschine festgestellt wird. Mit Hilfe der Steuerleitungen 7, 8, 9, 10 werden Steuersignale sowohl an die Transversalflußmaschine als auch das nachgeordnete Getriebe übertragen. Über die Steuerleitungen 9, 10 können beispielsweise Signale an einen Aktuator übermittelt werden, der das Getriebe betätigt, das heißt im vorliegenden Fall umschaltet. Denkbar sind als Aktuatoren handelsübliche Magnetventile, wie sie für die Getriebesteuerung Verwendung finden. Die an die Transversalflußmaschine angeschlossenen Steuerleitungen 7, 8 ermöglichen es, diese anzusteuern, beispielsweise die Leistungsabgabe kurzfristig zu erhöhen, so lange das Getriebe der anderen Maschine umgeschaltet wird, damit eine Zugkraftunterbrechung zu kommentieren.

Mit der vorliegenden Erfindung wird somit erstmals ein Verfahren und eine Vorrichtung für den Betrieb eines Fahrzeuges mit mehreren Antriebsmaschinen angegeben, bei dem es möglich ist, durch den Einsatz einfach aufgebauter Getriebe den Gesamtwirkungsgrad zu steigern.

## Patentansprüche

1. Verfahren zum Betrieb eines Fahrzeuges mit mehreren elektrischen Antriebsmaschinen (1,2), wobei jedem Rad einer Achse des Fahrzeuges eine elektrische Antriebsmaschine zugeordnet wird und jeder der Maschinen ein mindestens zweistufiges, schaltbares Getriebe (3,4) nachgeordnet ist, mit folgenden Merkmalen:
1.1 eine Schaltung der nachgeordneten Getriebe (3,4) erfolgt in Abhängigkeit vom Gesamtwirkungsgrad der jeweiligen Antriebsmaschine (1,2) beim Erreichen vorbestimmter, vom Gesamtwirkungsgrad abhängiger Schaltpunkte;
1.2 die den elektrischen Antriebsmaschinen (1,2) nachgeordneten Getriebe werden (3,4) zeitlich versetzt geschaltet, wobei der Schaltvorgang des einer ersten Antriebsmaschine nachgeordneten Getriebes überwacht wird und der Schaltvorgang eines einer zweiten Antriebsmaschine nachgeordneten Getriebes erst erfolgt, wenn der Schaltvorgang des ersten Getriebes abgeschlossen ist, derart, daß keine Zugkraftunterbrechung im Gesamtantriebssystem auftritt.

2. Verfahren nach Anspruch 1, **dadurch gekennzeichnet, daß** die elektrische Maschine eine Transversalflußmaschine ist.

3. Verfahren nach einem der Ansprüche 1 bis 2, **dadurch gekennzeichnet, daß**
zunächst das Getriebe der Antriebsmaschine des linken Rades in Fahrtrichtung gesehen der Vorder- bzw. Hinterachse geschaltet wird und anschließend das Getriebe der Antriebsmaschine des rechten Rades in Fahrtrichtung gesehen der Vorder- bzw. Hinterachse geschaltet wird, oder zunächst das Getriebe der Antriebsmaschine des rechten Rades in Fahrtrichtung gesehen der Vorder- bzw. Hinterachse geschaltet wird und anschließend das Getriebe der Antriebsmaschine des linken Rades in Fahrtrichtung gesehen der Vorder- bzw. Hinterachse geschaltet wird.

4. Verfahren nach einem der Ansprüche 1 bis 2, **dadurch gekennzeichnet, daß** zunächst das Getriebe der Antriebsmaschine des linken Rades in Fahrtrichtung gesehen der Vorderachse geschaltet wird, und anschließend das Getriebe der Antriebsmaschine des rechten Rades in Fahrtrichtung gesehen der Hinterachse oder zunächst das Getriebe der Antriebsmaschine des rechten Rades in Fahrtrichtung gesehen der Hinterachse geschaltet wird, und anschließend das Getriebe der Antriebsmaschine des linken Rades der Vorderachse geschaltet wird.

5. Verfahren gemäß einem der Ansprüche 1 bis 4, **dadurch gekennzeichnet, daß**
beim Schalten zum Ausgleich der Zugkraftreduktion durch den Schaltvorgang die übrigen Antriebsmaschinen kurzzeitig höher belastet werden, derart, daß überhaupt keine Zugkraftreduktion auftritt.

6. Steuereinrichtung zur Fahrsteuerung für ein Fahrzeug mit
mehreren Antriebsmaschinen (1,2), wobei jedem Rad einer Achse des Fahrzeuges eine Antriebsmaschine zugeordnet ist;
den Antriebsmaschinen nachgeordneten mindestens zweistufigen Getrieben (3,4);
den Antriebsmaschinen zugeordneten Drehzahlaufnehmern zur Aufnahme der Drehzahl einer Antriebsmaschine;
einer Steuereinrichtung für die Antriebsmaschine und die nachgeordneten Getriebe,
wobei die Steuereinrichtung (20) an das der ersten Antriebsmaschine (1) nachgeschaltete Getriebe (3) über eine erste Schaltleitung (9) angeschlossen ist, derart, daß bei Erreichen des Schaltpunktes ein Schaltimpuls zum Schalten des Getriebes über die Schaltleitung zugeführt wird;
**dadurch gekennzeichnet, daß**
die Antriebsmaschinen (1,2) elektrische Antriebsmaschinen sind;
die Steuereinrichtung (20) einen Speicherbereich aufweist, in den die von dem Drehzahlaufnehmer aufgenommene Drehzahl der Antriebsmaschine eingelesen wird und anhand eines Kennlinienfeldes, das in der Steuereinrichtung abgelegt ist, der Gesamtwirkungsgrad der Antriebsmaschine bestimmt wird; und
die Steuereinrichtung (20) an das einer zweiten Antriebseinrichtung (2) nachgeschaltete Getriebe (4) über eine zweite Schaltleitung (10) anschlossen ist, derart, daß ein Schaltimpuls von der Steuereinrichtung zugeführt wird, nachdem das erste Getriebe umgeschaltet worden ist.

7. Steuereinrichtung gemäß Anspruch 6, **dadurch gekennzeichnet, daß**
die elektrische Maschine eine Transversalflußmaschine ist.

8. Steuereinrichtung gemäß einem der Ansprüche 6 bis 7, **dadurch gekennzeichnet, daß**
die den Antriebsmaschinen nachgeordneten Getriebe zweistufige Getriebe sind.

9. Steuereinrichtung nach einem der Ansprüche 6 bis 8, **dadurch gekennzeichnet, daß**
die Getriebe Klauengetriebe sind.

10. Steuereinrichtung gemäß einem der Ansprüche 6 bis 9, **dadurch gekennzeichnet, daß**
die Getriebe synchronisiert sind.

11. Steuereinrichtung gemäß einem der Ansprürhe 6 bis 10, **dadurch gekennzeichnet, daß**
die Getriebe unsynchronisiert sind.

## Claims

1. Method for operating a vehicle with a plurality of electric drive motors (1, 2), wherein an electric drive motor is associated with each wheel of an axle of the vehicle and an at least two-stage, shiftable transmission (3, 4) is connected downstream from each of the motors, with the following features:
1.1 a shift of the transmission (3, 4) connected downstream takes place as a function of the overall efficiency of the respective drive motor (1, 2) upon reaching predetermined shifting points which are dependent on the overall efficiency;
1.2 the transmissions (3, 4) connected downstream from the electric drive motors (1, 2) are shifted in a time-staggered manner, wherein the shifting process of the transmission connected downstream from a first drive motor is monitored and the shifting process of a transmission connected downstream from a second drive motor only takes place when the shifting process of the first transmission has been completed, in such a way that no interruption of the pulling force occurs in the overall drive system.

2. Method according to claim 1, **characterised in that** the electric motor is a motor with transverse flux.

3. Method according to either of claims 1 to 2, **characterised in that** the transmission of the drive motor of the left-hand wheel viewed in the direction of travel, of the front or rear axle is initially shifted and then the transmission of the drive motor of the right-hand wheel viewed in the direction of travel, of the front or rear axle is shifted, or the transmission of the drive motor of the right-hand wheel viewed in the direction of travel, of the front or rear axle is initially shifted and then the transmission of the drive motor of the left-hand wheel viewed in the direction of travel, of the front or rear axle is shifted.

4. Method according to either of claims 1 to 2, **characterised in that** the transmission of the drive motor of the left-hand wheel viewed in the direction of travel, of the front axle is initially shifted and then the transmission of the drive motor of the right-hand wheel viewed in the direction of travel, of the rear axle or the transmission of the drive motor of the right-hand wheel viewed in the direction of travel, of the rear axle is initially shifted, and then the transmission of the drive motor of the left-hand wheel of the front axle is shifted.

5. Method according to any one of claims 1 to 4, **characterised in that** to compensate the reduction in pulling force owing to the shifting process, during shifting the remaining drive motors are briefly subjected to a higher loading in such a way that no reduction at all occurs in the pulling force.

6. Control device for drive control for a vehicle with
a plurality of drive motors (1, 2), wherein a drive motor is associated with each wheel of an axle of the vehicle;
at least two-stage transmissions (3, 4) connected downstream from the drive motors;
speed sensors associated with the drive motors for detecting the speed of a drive motor;
a control device for the drive motor and the transmissions connected downstream, wherein the control device (20) is connected via a first switching line (9) to the transmission (3) connected downstream from the first drive motor (1), in such a way that a shifting pulse to shift the transmission is supplied via the switching line when the shifting point is reached;
**characterised in that** the drive motors (1, 2) are electric drive motors;
the control device (20) has a memory region, into which the speed of the drive motor detected by the speed sensor is read in and the overall efficiency of the drive motor is determined with the aid of a characteristic curve field filed in the control device; and
the control device (20) is connected via a second switching line (10) to the transmission (4) connected downstream from a second drive device (2), in such a way that a shifting pulse is supplied from the control device once the first transmission has been shifted.

7. Control device according to claim 6, **characterised in that** the electric motor is a motor with transverse flux.

8. Control device according to either of claims 6 to 7, **characterised in that** the transmissions connected downstream from the drive motors are two-stage transmissions.

9. Control device according to any one of claims 6 to 8, **characterised in that** the transmissions are constant mesh transmissions.

10. Control device according to any one of claims 6 to 9, **characterised in that** the transmissions are synchronised.

11. Control device according to any one of claims 6 to 10, **characterised in that** the transmissions are unsynchronised.

## Revendications

1. Procédé destiné à faire fonctionner un véhicule doté de plusieurs machines électriques d'entraînement (1,2), dans lequel une machine électrique d'entraînement est affectée à chaque roue d'un essieu du véhicule et une transmission commutable, à au moins deux étages (3,4), est disposée à la suite de chacune des machines, avec les particularités suivantes :
1.1 une commutation des transmissions disposées à la suite (3,4) est réalisée en fonction du rendement global de chaque machine d'entraînement (1,2), lorsque des points d'enclenchement prédéterminés, dépendants du rendement global, sont atteints ;
1.2 les transmissions (3,4) disposées à la suite des machines d'entraînement (1,2) sont commutées de manière décalée dans le temps, le processus de commutation de la transmission disposée à la suite d'une première machine d'entraînement étant surveillé, et le processus de commutation d'une transmission disposée à la suite d'une deuxième machine d'entraînement n'étant effectué que lorsque le processus de commutation de la première transmission est terminé, de sorte qu'il ne se produit aucune interruption de la force de traction dans le système global d'entraînement.

2. Procédé selon la revendication 1, **caractérisé en ce que** la machine électrique est une machine à flux transversal.

3. Procédé selon l'une des revendications 1 à 2, **caractérisé en ce que** la transmission de la machine d'entraînement de la roue gauche, vue dans le sens de la marche, est d'abord couplée à l'essieu avant ou arrière et ensuite la transmission de la machine d'entraînement de la roue droite, vue dans le sens de la marche, est couplée à l'essieu avant ou arrière, ou bien la transmission de la machine d'entraînement de la roue droite, vue dans le sens de la marche, est couplée à l'essieu avant ou arrière et ensuite la transmission de la machine d'entraînement de la roue gauche, vue dans le sens de la marche, est couplée à l'essieu avant ou arrière.

4. Procédé selon l'une des revendications 1 ou 2, **caractérisé en ce que** la transmission de la machine d'entraînement de la roue gauche, vue dans le sens de la marche, est d'abord couplée à l'essieu avant et ensuite la transmission de la machine d'entraînement de la roue droite, vue dans le sens de la marche, est couplée à l'essieu arrière ou bien la transmission de la machine d'entraînement de la roue droite, vue dans le sens de la marche, est d'abord couplée à l'essieu arrière et ensuite, la transmission de la machine d'entraînement de la roue gauche est couplée à l'essieu avant.

5. Procédé selon l'une des revendications 1 à 4, **caractérisé en ce que**, lors du couplage, afin de compenser la réduction de la force de traction sous l'effet de processus de commutation, les autres machines d'entraînement sont temporairement plus fortement chargées, de telle sorte qu'il ne se produit pratiquement aucune réduction de la force de traction.

6. Dispositif de commande destiné à commander la marche d'un véhicule comportant :
plusieurs machines d'entraînement (1,2), une machine d'entraînement étant affectée à chaque roue d'un essieu du véhicule ;
des transmissions à au moins deux étages (3,4) disposées à la suite des machines d'entraînement ;
des capteurs de vitesse affectés aux machines d'entraînement, destinés à enregistrer la vitesse d'une machine d'entraînement, ;
un dispositif de commande pour la machine d'entraînement et les transmissions disposées à la suite, dans lequel le dispositif de commande (20) est raccordé à la transmission (3) disposée à la suite de la première machine d'entraînement ( 1) par le biais d'une première ligne de connexion (9), de telle sorte que lorsque le point d'enclenchement est atteint, une impulsion destinée à commuter la transmission par le biais de la ligne de connexion est produite ;
**caractérisé en ce que** les machines d'entraînement (1,2) sont des machines d'entraînement électriques ;
le dispositif de commande (20) présente une zone de mémoire dans laquelle la vitesse de rotation de la machine d'entraînement relevée par le capteur de vitesse est mémorisée et le rendement global de la machine d'entraînement est déterminé au moyen d'un champ de caractéristiques qui est placé dans le dispositif de commande; et
le dispositif de commande (20) est raccordé à la transmission (4) disposée à la suite d'une deuxième machine d'entraînement (2) par le biais d'une deuxième ligne de connexion (10), de sorte qu'une impulsion de commutation soit envoyée par le dispositif de commande après commutation de la première transmission.

7. Dispositif de commande selon la revendication 6, **caractérisé en ce que** la machine électrique est une machine à flux transversal.

8. Dispositif de commande selon l'une des revendications 6 ou 7, **caractérisé en ce que** les transmissions disposées à la suite des machines d'entraînement sont des transmissions à deux étages.

9. Dispositif de commande selon l'une des revendications 6 à 8, **caractérisé en ce que** les transmissions sont des engrenages à griffes.

10. Dispositif de commande selon l'une des revendications 6 à 9, **caractérisé en ce que** les transmissions sont synchronisées.

11. Dispositif de commande selon l'une des revendications 6 à 10, **caractérisé en ce que** les transmissions sont non synchronisées.
